# FASCICULE DE BREVET EUROPEEN

(11) **EP 1 564 860 B1**
(45) Date de publication et mention de la délivrance du brevet: **15.06.2011**
(21) Numéro de dépôt: 04075450.9
(22) Date de dépôt: 13.02.2004
(51) Int. Cl.: H02G 3/12

(54) **Boîtier pour cloisons creuses pourvu de brides d'adaptation à l'épaisseur de cloison**
Wanddickeanpassungsflanschgehäuse für eine dünne Wand
Wall thickness adapted flanged housing for a thin wall

(43) Date de publication de la demande: 17.08.2005
(73) Titulaire: Alombard, 45750 Saint-Pryvé - Saint-Mesmin (FR)
(72) Inventeur: Lapouble, Serge, 45370 Dry (FR); Harre, Olivier, 45000 Orleans (FR)
(74) Mandataire: Debay, Yves

(56) Documents cités:
- EP-A- 1 303 017
- FR-A- 2 839 818

## Description

La présente invention se rapporte au domaine des boîtiers insérables dans une cloison pour encastrer dans cette cloison un appareillage électrique, tel que, par exemple, un interrupteur ou une prise de courant. L'invention concerne plus particulièrement un boîtier pour cloisons creuses pourvu de brides d'adaptation à l'épaisseur de cloison.

Il est connu dans l'art antérieur de nombreux boîtiers à brides pour cloisons creuses, destinés à la fixation de l'appareillage électrique encastré et permettant la mise en place de l'appareillage électrique de façon sure et durable, en particulier lorsque ces derniers sont fixés à l'aide de vis présentes sur les boîtiers. L'appareillage électrique destiné à être placé dans le boîtier comporte, en général, un mécanisme qui s'insère dans le boîtier, et une façade comportant une interface, et deux trous oblongs destinés à la fixation de l'appareillage sur le boîtier. L'interface consiste, par exemple, en un bouton dans le cas où l'appareillage électrique est un interrupteur, ou en deux puits dans le cas où l'appareillage électrique est une prise de courant. L'axe de symétrie de chaque trou oblong de la façade décrit un arc de cercle. Les deux trous oblongs sont, en général, disposés en vis-à-vis sur la façade de l'appareillage électrique, l'axe de cet arc de cercle étant orthogonal à la façade de l'appareillage électrique, de telle façon que les axes des arcs de cercle décrits par les axes de symétrie des trous oblongs sont confondus selon un axe, que l'on appellera principal, et sont orthogonaux à la façade de l'appareillage électrique. Au moins une extrémité de chaque trou oblong se termine par un orifice circulaire d'axe orthogonal à la façade de l'appareillage électrique. Le diamètre de l'orifice est suffisant pour permettre à une tête de vis de passer par l'orifice circulaire. Lorsque les vis du boîtier sont partiellement dévissées, l'appareillage électrique est inséré dans le boîtier, les vis du boîtier pénétrant dans les orifices circulaires de la façade de l'appareillage électrique.

Avec ce type de boîtier, l'appareillage électrique est alors facilement mis en place en exerçant une rotation de ce dernier autour de l'axe principal. Les vis du boîtier sont ensuite serrées pour assurer un positionnement d'aplomb et un maintien de l'appareillage électrique. Les boîtiers comportent des moyens de fixation à la cloison, par exemple des brides, actionnés par des vis. Les brides prennent appui sur l'arrière de la cloison creuse après que la cloison a été percée au diamètre du boîtier avec, par exemple, une scie à cloche.

En général, l'appareillage électrique est fixé sur ce type de boîtier à l'aide d'une première paire de vis, et les brides du boîtier sont manoeuvrées à l'aide d'une deuxième paire de vis pour fixer le boîtier sur la cloison. Dans ce type de boîtier, les brides sont séparées du boîtier. L'installateur doit, lors de la pose du boîtier, actionner les vis de manoeuvre des brides pour fixer le boîtier à la cloison, puis après avoir raccordé l'appareillage électrique aux conducteurs électriques débouchant à l'intérieur du boîtier, fixer l'appareillage par les vis du dit boîtier. La pose d'un boîtier de ce type entraîne donc au moins deux manoeuvres, ce qui entraîne une pose relativement compliquée et une perte de temps. D'un point de vue industriel, les fabricants de tels boîtiers sont contraints à développer des machines complexes afin d'assembler les deux paires de vis et les brides au boîtier, ce qui occasionne des coûts importants répercutés sur le prix de vente.

Par ailleurs, de nombreux boîtiers à brides pour cloisons creuses présentent, sur leur pourtour extérieur, près du bord ouvert du boîtier, une collerette permettant d'empêcher l'enfoncement du boîtier dans la cloison lors de sa fixation. La présence de cette collerette entraîne l'existence d'un espace entre la façade de l'appareillage électrique et la cloison. Ceci a pour inconvénient que la façade de l'appareillage électrique n'est pas plaquée correctement contre la cloison, entraînant un jeu entre la façade de l'appareillage électrique et la cloison.

La demande de brevet FR 2 839 818, du même déposant, enseigne un boîtier à brides pour cloisons creuses plus simple et rapide à poser, permettant un plaquage parfait de l'appareillage électrique contre la cloison. Le boîtier est doté de deux brides articulées et actionnées en translation par une vis pour fixer le boîtier dans la cloison creuse, le vissage de ladite vis permettant simultanément de fixer l'appareillage électrique dans le boîtier et de pincer la cloison creuse entre la façade de l'appareillage électrique et les brides.

Ce type de boîtier est certes facilement insérable pour un type déterminé de paroi mais ne peut convenir pour des cloisons d'épaisseur variée. Pourtant, les cloisons creuses dans lesquelles sont mis en oeuvre de tels boîtiers n'ont pas toutes la même épaisseur. Ainsi, les cloisons les plus répandues, qui sont constituées d'une plaque de plâtre revêtue sur chacun des deux parements d'une feuille de papier cartonnée pour en assurer une certaine rigidité, sont par exemple disponibles dans les épaisseurs 10 et 13 mm. De plus, il est fréquemment associé deux cloisons fixées l'une sur l'autre, pour augmenter l'indice d'affaiblissement acoustique de la paroi résultante. Dès lors, l'épaisseur totale de la cloison peut être portée par exemple à 20 ou 26 mm.

Il existe donc un besoin d'utiliser des boîtiers pour appareillages électriques aptes à se fixer à la cloison creuse quelle que soit l'épaisseur de la paroi, tout en évitant l'emploi de plusieurs paires de vis.

Le document EP1303017 propose un système de fixation pour boîtier qui doit être replié au niveau de rainures adaptées pour permettre la fixation du boîtier sur des cloisons d'épaisseurs différentes. Cependant ce système de fixation, qui comprend une première extrémité fixe et une seconde extrémité destinée à coulisser dans une gorge, présente des points de faiblesse au niveau des rainures de repliement. Un inconvénient majeur de ce type de dispositif est qu'il repose entièrement sur ces points de faiblesse pour former le système de fixation. Ainsi, une cassure qui surviendrait sur un de ces points de faiblesse rendrait la fixation du boîtier hors d'usage pour interagir avec une façade.

La présente invention a donc pour objet de supprimer un ou plusieurs des inconvénients de l'art antérieur en définissant un boîtier à brides adaptable à l'épaisseur de la paroi permettant de s'affranchir de la présence de points de faiblesse dans sa structure..

A cet effet, l'invention concerne un boîtier à brides comportant une partie cylindrique fermée par un fond pour fixer un appareillage électrique dans une cloison creuse, des brides de fixation articulées solidaires du boîtier, aptes chacune à être entraînée par une vis pour fixer simultanément l'appareillage électrique dans le boîtier et pincer la cloison creuse entre une façade de l'appareillage électrique et les brides, étant chacune des brides caractérisé en ce que chacune des brides est mobile en translation selon un axe parallèle à la génératrice de la partie cylindrique, reliée au boîtier par des moyens d'allongement qui incluent une pluralité de segments articulés pour s'étendre selon une direction longitudinale lors du pincement de la cloison entre une façade de l'appareillage électrique et les brides.

L'invention offre ainsi un boîtier adaptable à l'épaisseur de cloison puisque les brides munies des moyens d'allongement peuvent être déplacées en translation selon une amplitude plus ou moins grande pour venir s'appuyer sur la cloison.

Selon une autre particularité de l'invention, les brides, les moyens d'allongement et le boîtier forment un ensemble monobloc.

Selon une autre particularité, les moyens d'allongement comportent des segments articulés deux à deux par une portion de moindre épaisseur formant une charnière propre à permettre l'allongement du dispositif articulé sous l'action d'un vissage dans la bride exercé par la vis.

Selon une autre particularité, chaque bride est située dans une ouverture pratiquée dans la partie cylindrique et délimitée par une découpe en "U", les moyens d'allongement étant conçus pour relier la bride au fond de manière flexible, de façon à permettre la rotation de la bride autour de l'extrémité des moyens d'allongement reliée au fond du boîtier, ladite rotation correspondant à un basculement de la bride vers le centre de la partie cylindrique pour permettre l'introduction du boîtier dans un perçage d'une cloison.

Selon une autre particularité, chaque bride comprend un puits longitudinal, taraudé à l'intérieur, conçu pour accueillir une vis et une portion plane substantiellement parallèle au fond du boîtier, au moins une rampe destinée à faciliter l'insertion du boîtier dans un perçage étant formée perpendiculairement à la portion plane.

Selon une autre particularité, des moyens de guidage comprenant un guide partiellement cylindrique sont agencés dans l'alignement longitudinal du puits de chacune des brides pour permettre de positionner de façon amovible chaque vis selon un axe longitudinal.

Selon une autre particularité, les moyens d'allongement comprennent une série de segments articulés aptes à s'allonger d'une longueur comprise entre 5 et 20 mm sous l'action du vissage d'une vis.

Selon une autre particularité, chaque paire de segments est agencée pour former un angle fermé déterminé inférieur à 60°, les segments étant aptes à être alignés entre eux lorsque la bride est complètement vissée.

Selon une autre particularité, chaque bride comporte latéralement au moins un tenon propre à coulisser dans une rainure formée dans l'épaisseur de la paroi du boîtier, selon un axe parallèle à la génératrice de la partie cylindrique, le tenon formant un moyen de blocage pour empêcher la rotation des brides selon l'axe des vis lors du vissage.

Selon une autre particularité, les moyens d'allongement sont délimités latéralement par des fentes du boîtier prévues pour conserver une liberté de mouvement des segments articulés.

Selon une autre particularité, des picots sont situés sur le pourtour extérieur du boîtier à proximité de son bord ouvert pour l'empêcher de tourner par rapport à la cloison creuse et assurer son maintien en attendant la mise en place de l'appareillage électrique.

Selon une autre particularité, la partie cylindrique et/ou le fond du boîtier comprend un ou plusieurs opercules détachables pour permettre la connexion de l'appareillage électrique à des fils électriques situés dans la cloison creuse.

Selon une autre particularité, l'arrière de l'appareillage électrique étant inséré dans le boîtier encastré dans la cloison creuse, chaque vis, insérée dans un moyen de fixation de l'appareillage électrique, est vissée dans le puits associé à ladite vis, et chaque bride subit un mouvement de translation selon l'axe de la vis, entraînant l'insertion du tenon dans la rainure, pour assurer la prise en sandwich de la cloison entre les portions planes des brides et la face arrière de la façade de l'appareillage électrique.

Selon une autre particularité, les moyens de fixation de l'appareillage électrique sont au moins deux trous oblongs dont l'axe de symétrie décrit un arc de cercle et dont une extrémité se termine par une portion circulaire de diamètre supérieur au diamètre de la tête de vis, l'entraxe des trous oblongs étant sensiblement égale à l'entraxe des vis.

Un autre objet de la présente invention est d'utiliser le boîtier à brides pour fixer des appareillages électriques dans des cloisons d'épaisseur variable.

A cet effet il est avantageusement proposé une utilisation du boîtier selon l'invention, caractérisée en ce que le boîtier sert à fixer un appareillage électrique dans un perçage cylindrique d'une cloison creuse de diamètre sensiblement égal au diamètre extérieur de la partie cylindrique du boîtier, la cloison ayant une épaisseur comprise entre 9 et 26 mm.

Selon une autre particularité, la fixation de l'appareillage électrique dans la cloison creuse comprend :
- le détachement d'au moins un opercule détachable, et l'insertion dans le boîtier, par l'ouverture laissée par l'opercule détaché, de l'extrémité d'une gaine contenant des fils électriques situés dans la cloison,
- insertion du boîtier dans le perçage préalablement effectué dans la cloison, l'ouverture du boîtier étant orientée vers l'installateur, chaque bride subissant un mouvement de rotation vers l'intérieur du boîtier pour permettre le passage du boîtier dans le perçage,
- mise en position du boîtier dans la cloison par rotation de chaque bride vers l'extérieur du boîtier, chaque bride étant située derrière la cloison,
- connexion de l'appareillage électrique avec l'extrémité des fils électriques accessibles dans le boîtier,
- insertion de l'appareillage électrique dans l'ouverture du boîtier, la façade de l'appareillage électrique comprenant des moyens de fixation,
- insertion d'une vis du boîtier dans chaque moyen de fixation de l'appareillage électrique, et rotation de la façade de l'appareillage électrique autour de l'axe du boîtier, d'un angle déterminé,
- serrage de chaque vis entraînant une translation selon l'axe de la vis de la bride associée et l'étirement des moyens d'allongement pour que la cloison creuse soit prise en sandwich entre les brides et la face arrière de la façade de l'appareillage électrique.

L'invention, avec ses caractéristiques et avantages, ressortira plus clairement à la lecture de la description faite en référence aux dessins annexés donnés à titre d'exemples non limitatifs dans lesquels :
- la figure 1A représente une vue en perspective du boîtier à brides pour cloisons creuses selon l'invention ;
- la figure 1B montre une vue en coupe selon un plan perpendiculaire à l'axe A d'un mode de réalisation d'une bride selon l'invention ;
- la figure 2 représente une vue en perspective du boîtier à brides pour cloisons creuses analogue à celle de la figure 1A, les vis étant ôtées ;
- la figure 3 représente une vue en perspective de la façade de l'appareillage électrique dans un mode de réalisation ;
- la figure 4 représente une vue de côté du boîtier à brides selon l'invention.

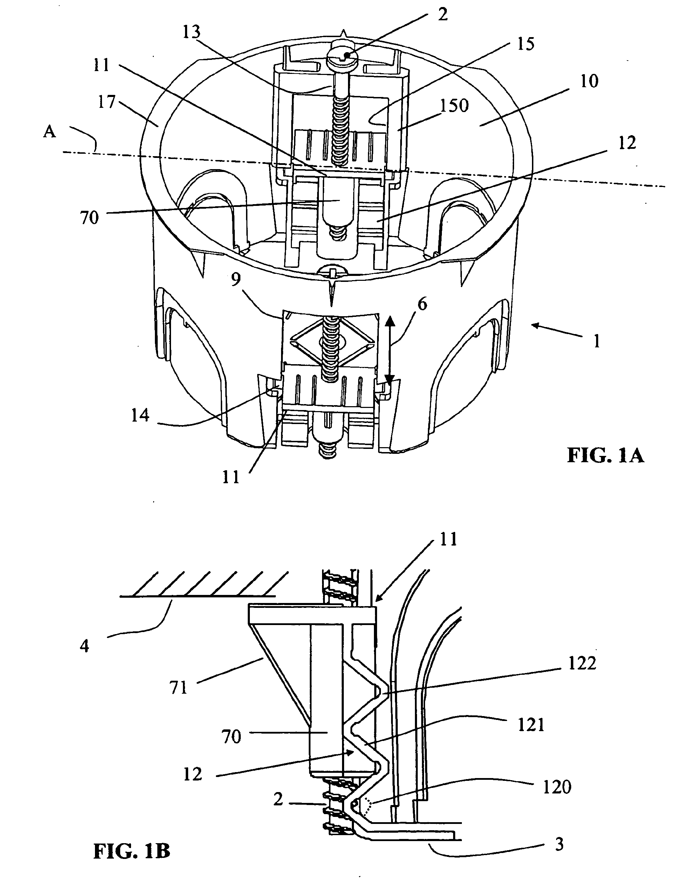

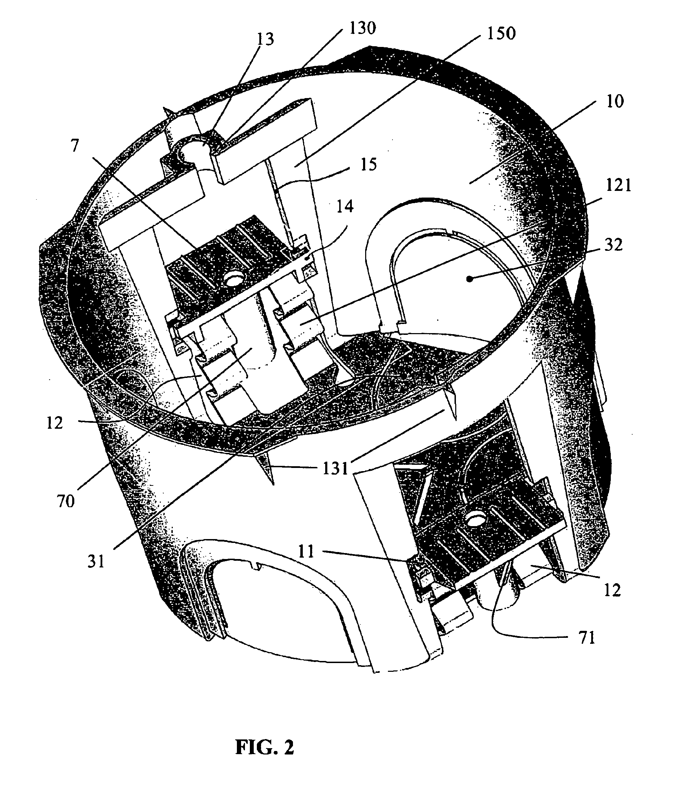

Le boîtier (1) à brides (11) selon l'invention, représenté en particulier sur les figures 1A et 2, comprend une partie cylindrique (10), fermée d'un seul côté par un fond (3), et au moins deux brides (11). Chaque bride (11) est située dans une ouverture pratiquée dans la partie cylindrique (10) et délimitée par une découpe (9) en forme de U. Dans le cas où deux brides (11) sont présentes sur le boîtier (1), les brides (11) sont sensiblement situées l'une en face de l'autre. Les brides (11) sont munies d'un puits (70) taraudé pouvant être traversé par une vis (2). Chaque bride (11) est reliée au boîtier (1) par des moyens d'allongement (12). Dans l'exemple de la figure 1B, chacune des brides (11) est reliée au fond (3) du boîtier (1) par au moins un dispositif articulé comportant des segments articulés (121). Ce type de moyens d'allongement (12) est apte à permettre le basculement ainsi que la translation des brides (11) lors de la mise en place du boîtier (1). Le maintien de la bride (11) au boîtier n'est réalisé que sur le fond (3) du boîtier (1) que par le dessous de la bride, par l'intermédiaire des moyens d'allongement (12), les trois autres bords de la bride (11) étant séparés du reste du boîtier (1) par la découpe en forme de U. Les moyens d'allongement (12) sont conçus pour relier la bride (11) au fond (3) de manière flexible, de façon à permettre la rotation de la bride (11) autour de l'extrémité des moyens d'allongement (12) reliée au fond (3) du boîtier (1). Une telle rotation correspond à un basculement de la bride (11) vers le centre de la partie cylindrique (10) pour permettre l'introduction du boîtier (1) dans un perçage d'une cloison (4).

Dans un mode de réalisation préféré de l'invention, les brides sont aptes chacune à être entraînée par une vis (2) pour fixer simultanément l'appareillage électrique dans le boîtier (1) et pincer la cloison creuse (4) entre une façade de l'appareillage électrique et les brides (11). Comme l'illustre la figure 1B, chaque bride (11) est mobile en translation selon un axe parallèle à la génératrice de la partie cylindrique (10) et reliée au boîtier (1) par les moyens d'allongement (12) qui incluent une pluralité de segments articulés (121) pour s'étendre selon une direction longitudinale. Les brides (11), les moyens d'allongement (12) et le boîtier (1) peuvent former un ensemble monobloc.

Dans un mode de réalisation de l'invention, deux montants (150) perpendiculaires au fond (3), formés par exemple par des plaques rectangulaires réparties de part et d'autre de la découpe en forme de U (9), sont disposés sur la partie intérieure de la partie cylindrique (10). Des moyens de guidage (13) comprenant un guide partiellement cylindrique pour guider une vis (2) sont formés contre chaque paire de montants (150), entre le sommet de chaque découpe (9) et le bord (17) ouvert du boîtier (1). Les moyens de guidage (13) sont agencés dans l'alignement longitudinal du puits (70) de chacune des brides (11) pour permettre de positionner de façon amovible chaque vis selon un axe longitudinal. Les moyens de guidage (13) peuvent consister par exemple en un élément en forme d'oméga majuscule ou W arrondi disposé transversalement à l'extrémité supérieure des montants (150). La partie centrale des moyens de guidage (13) peut comprendre deux bossages (130) situés à proximité de l'ouverture de la partie centrale, permettant de maintenir une vis (2) dans l'espace disponible dans la partie centrale. A chaque bride (11) sont associés des moyens de guidage (13) pour faciliter le basculement des brides vers l'intérieur du boîtier (1) lorsque les vis (2) sont partiellement vissées dans les brides (11). La bride (11) a une position de repos pour laquelle les moyens de guidage (13) sont en aplomb du puits taraudé (70).

Comme représenté à la figure 1B, chaque bride (11) comprend un puits (70) longitudinal, taraudé à l'intérieur, conçu pour accueillir une vis (2) et une portion plane (7) substantiellement parallèle au fond (3) du boîtier (1). De plus, une rampe inclinée (71) destinée à faciliter l'insertion du boîtier (1) dans un perçage est formée perpendiculairement à la portion plane (7). D'autres modes de réalisation de la rampe (71), par exemple sous la forme d'une portion en biais reliant le corps du puits (70) à l'extrémité libre de la portion plane, peuvent naturellement être envisagés. La portion plane (7) est en partie située à l'extérieur de la partie cylindrique (10) lorsque la bride (11) est au repos. Une ou plusieurs rampes (71) parallèles peuvent être formées contre chaque portion plane (7) et contre le corps du puits taraudé (70).

Le puits (70) est creusé sensiblement de façon parallèle à la partie cylindrique (10) et disposé sensiblement en position médiane dans la découpe en U (9). Une vis (2) est partiellement vissée dans chaque puits (70), idéalement avant insertion du boîtier (1) dans la cloison creuse (4). Chaque puits (70) est taraudé par la vis (2) lors de la fabrication du boîtier (1). La partie supérieure de chaque vis (2) est alors située dans la partie centrale des moyens de guidage (13), les bossages (130) de chaque partie centrale permettant de maintenir droite chaque bride (11). Dans le mode de réalisation des figures 1A et 2, chaque bride (11) comporte latéralement au moins un tenon (14) propre à coulisser dans une rainure (15) formée dans l'épaisseur de la paroi du boîtier (1), selon un axe parallèle à la génératrice de la partie cylindrique (10). Les rainures (15) sont par exemple pratiquées dans chacun des deux montants (150). Le tenon (14) forme alors un moyen de blocage pour empêcher la rotation des brides (11) selon l'axe des vis (2) lors du vissage. Comme représenté à la figure 2, deux tenons (14) peuvent être disposés latéralement sur chaque côté de la portion plane (7). Les tenons (14) ont, par exemple, une forme parallélépipédique.

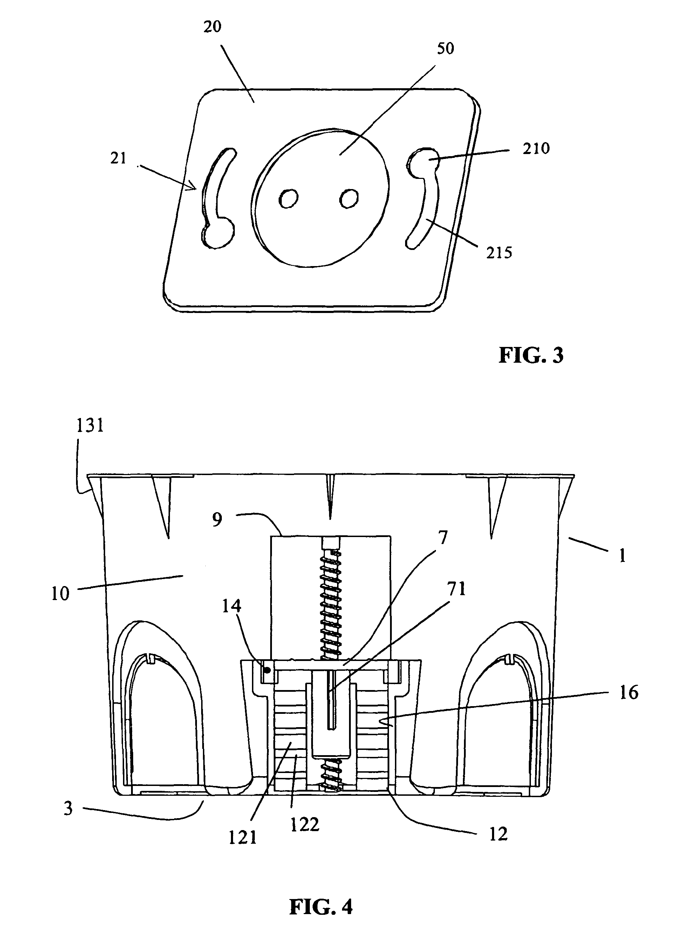

Les moyens d'allongement (12) peuvent être agencés le long du puits (70), comme illustré à la figure 1B, répartis latéralement en deux dispositifs articulés grâce une série de segments articulés (121). Les segments articulés (121) sont par exemple aptes à s'allonger d'une longueur (6, figure 1A) comprise entre 5 et 20 mm sous l'action du vissage d'une vis (2). Les moyens d'allongement (12) sont délimités latéralement par des fentes (16, figure 4) du boîtier (1) prévues pour conserver une liberté de mouvement des segments articulés (121). Les fentes (16) peuvent correspondre à un espacement entre les moyens d'allongement (12) et les bords de la découpe en U (9). Dans un mode de réalisation de l'invention, l'ensemble comprenant les moyens d'allongement (12), la portion plane (7), la rampes (71), le puits (70) et la paire de tenons (14) forme une bride (11). La longueur de chaque bride (11) est inférieure, au repos, à la distance comprise entre le fond (3) du boîtier (1) et la pièce centrale des moyens de guidage (13) associée à ladite bride (11). La position des brides (11) au repos correspond à la position des brides (11) pour laquelle l'axe de chaque puits (70) est sensiblement confondu avec l'axe de la partie centrale des moyens de guidage (13) associée. Grâce aux moyens d'allongement, la bride peut être rapprochée du bord (17) selon une amplitude de translation (6) par exemple de l'ordre de 17 mm. Le boîtier (1) selon l'invention peut donc servir à fixer un appareillage électrique dans un perçage cylindrique d'une cloison creuse (4) ayant une épaisseur comprise entre 9 et 26 mm. Il suffit simplement que le diamètre du perçage soit sensiblement égal au diamètre extérieur de la partie cylindrique (10) du boîtier (1).

Ainsi, lorsque la cloison (4) présente une épaisseur sensiblement égale à 26 mm, les brides (11) ne subissent qu'une faible translation vers le bord ouvert (17) du boîtier (1), les moyens d'allongement (12) ne s'étirant alors que de 1 à 2 mm. En revanche, lorsque la cloison (4) présente une épaisseur sensiblement égale à 10 mm, les brides (11) subissent une translation plus importante vers le bord (17), les moyens d'allongement (12) pouvant alors atteindre par exemple une amplitude (6) de l'ordre de 16-18 mm.

En référence à la figure 1B, les moyens d'allongement (12) comportent des segments (121) articulés deux à deux par une portion de moindre épaisseur (122) formant une charnière propre à permettre l'allongement du dispositif articulé (12) sous l'action d'un vissage dans la bride (11) exercé par la vis (2). Chaque bride (11) peut donc subir une translation sans risque de se désolidariser du reste du boîtier (1) grâce à la jonction réalisée par un ou plusieurs dispositifs articulés (12). Chaque paire de segments (121) peut être agencée pour former un angle fermé (120) déterminé inférieur à 60° à l'état de repos. Les segments (121) sont également aptes à être alignés entre eux lorsque la bride (11) est complètement vissée. Autrement dit, l'étirement de chaque dispositif articulé (12), sous l'action du vissage de la bride, peut provoquer un pliage au niveau de chaque charnière, de sorte que l'angle formé par deux segments consécutifs tende vers un angle plat. La position de la portion plane (7) de la bride (11) lors de l'étirement maximal peut correspondre par exemple à une distance minimale du bord ouvert (17) du boîtier (1) de l'ordre de 10 mm. Inversement, la distance maximale de la portion plane (7) par rapport au bord ouvert (17) peut être de l'ordre de 26 mm.

En référence à la figure 2, le boîtier (1) comprend également au moins un opercule détachable (31, 32), par exemple en forme d'oreille. La partie cylindrique (10) comprend par exemple quatre premiers opercules détachables (31) et le fond (3), quatre seconds opercules détachables (32), de telle façon que chaque premier opercule détachable (31) est associé à un second opercule détachable (32) situé à proximité du premier opercule détachable (31), les bordures plates des premiers opercules détachables (31) étant situées à proximité des bordures plates des seconds opercules détachables (32). Dans ce mode de réalisation, chaque premier opercule détachable (31) est sensiblement situé en vis-à-vis d'un autre premier opercule détachable (31). Le plan de symétrie de deux premiers opercules détachables (31) se faisant face est alors sensiblement perpendiculaire au plan de symétrie des deux autres premiers opercules détachables (31) se faisant face.

Les opercules détachables (31, 32) ont une épaisseur plus fine que la partie cylindrique (10) et le fond (3) du boîtier (1), et sont prédécoupées, ce qui permet de les détacher facilement par une simple pression du doigt exercée sur les opercules détachables (31, 32), tout en maintenant fermement le boîtier (1).

Le boîtier (1) peut comprendre une pluralité de picots (131) sur le pourtour extérieur de la partie cylindrique (10), à proximité du bord ouvert (17) du boîtier (1) pour, lorsque ce dernier est encastré dans une cloison creuse (4), à la fois empêcher l'enfoncement trop important du boîtier (1) dans la cloison creuse (4), et assurer le maintien du boîtier (1) dans la cloison creuse (4) en attendant la mise en place de l'appareillage électrique. Ces picots (131) ou tout autre moyen de retenue équivalent permettent d'éviter toute rotation du boîtier (1) par rapport à la cloison creuse (4).

La façon de fixer le boîtier (1) avec un appareillage électrique dans une cloison (4) va à présent être décrie, notamment en référence aux figures 1B et 3.

La pose d'un boîtier (1) à brides sur une cloison creuse (4) nécessite une étape préalable de perçage de la cloison (4), par exemple, par une scie à cloche. Une cloison creuse (4) est constituée, en général, d'au moins une paroi, par exemple en plâtre, disposée parallèlement à une autre paroi, par exemple en plâtre, et supportée par une ossature métallique ou en bois, de telle façon qu'un espace soit compris entre les deux parois. Un autre type de cloison creuse consiste à associer deux parois, par exemple en plâtre, fixées l'une sur l'autre, cette cloison offrant un indice d'affaiblissement acoustique plus élevé. L'étape de perçage par une scie à cloche permet d'enlever un morceau cylindrique de la cloison creuse (4), sur toute l'épaisseur de la paroi, le diamètre du morceau cylindrique étant sensiblement égal ou légèrement supérieur au diamètre extérieur de la partie cylindrique (10) du boîtier (1).

Le boîtier (1) à brides est inséré à la place du morceau cylindrique qui a été enlevé de la cloison creuse (4) à l'aide de la scie à cloche, le bord ouvert (17) du boîtier (1) étant tourné vers l'installateur. Le boîtier (1) est inséré dans la cloison creuse (4), par exemple en tirant simultanément avec les doigts chaque vis (2) partiellement vissée dans la bride (11), vers l'intérieur du boîtier (1), pour que le boîtier (1) puisse pénétrer dans la cloison creuse (4). Chaque bride (11) subit alors une rotation par rapport au fond (3) du boîtier (1) et chaque vis (2) sort de la partie centrale des moyens de guidage (13). Les brides (11) peuvent également s'enfoncer vers l'intérieur du boîtier (1) sans intervention de l'installateur, par contact de l'épaisseur de la cloison creuse (4) sur les rampes (71) des brides (11). Le bord ouvert (17) du boîtier (1), après insertion du boîtier (1) dans la cloison, se trouve alors à proximité de la face extérieure de la cloison creuse (4). La distance comprise entre chaque portion plane (7) et le bord ouvert (17) du boîtier (1) est supérieure ou égale à l'épaisseur de la cloison creuse (4). L'épaisseur de cloison creuse (4) pouvant varier par exemple de 10 à 26 mm, la distance comprise entre chaque portion plane (7) et le bord ouvert (17) du boîtier (1) peut être au départ légèrement supérieure à 26 mm pour permettre une libre rotation de chaque bride (11) derrière l'épaisseur de la cloison creuse. Lorsque le boîtier (1) est suffisamment inséré dans la cloison creuse, chaque bride (11) est repoussée avec les doigts vers sa position de repos par rotation vers l'extérieur du boîtier (1). Les portions planes (7) sont alors sensiblement parallèles à la face intérieure de la cloison creuse (4) dans laquelle a été encastré le boîtier (1), et situées à proximité de la face intérieure de cette paroi. Chaque vis (2) partiellement vissée dans le puits (70) est alors de nouveau insérée dans la partie centrale des moyens de guidage (13). Le puits (70) de chaque bride (11) se situe alors de nouveau sensiblement dans l'axe de la partie centrale de guidage associée.

Au moins un opercule détachable (31, 32) est détaché avant l'insertion du boîtier (1) dans la cloison creuse (4). Juste avant l'insertion du boîtier (1) dans la cloison creuse, le boîtier (1) est amené à proximité du trou laissé dans la cloison après enlèvement du morceau cylindrique, afin que la gaine contenant les extrémités des fils électriques présents dans la cloison (4), auxquels doit être raccordé l'appareillage électrique, soit insérée dans les ouvertures laissées à l'emplacement des parties détachables (31, 32) qui ont été préalablement détachées.

L'appareillage électrique comprend deux parties rigidement fixées : le mécanisme (non représenté) de l'appareillage électrique et la façade (20). Seul le mécanisme s'insère dans le boîtier (1). La façade (20), représentée en particulier sur la figure 3, comprend une interface (50) consistant, par exemple, en deux trous si l'appareillage électrique est une prise de courant, ou en un bouton si l'appareillage électrique est un interrupteur. La façade (20) comprend également deux ouvertures (21) disposés en vis-à-vis sur la façade (20), chaque ouverture (21) étant constituée d'un trou oblong (215) dont l'axe de symétrie décrit un arc de cercle. Au moins une extrémité de chaque ouverture (21) se termine par un orifice circulaire (210). Le diamètre de chaque orifice circulaire (210) est supérieur au diamètre de la tête de vis des vis (2) du boîtier (1). La distance entre les vis (2) du boîtier (1) est la même que la distance entre les deux ouvertures (21). La surface de la façade (20) de l'appareillage électrique étant plus grande que la section de la partie cylindrique (10) du boîtier (1), au moins une fraction de la face arrière de la façade (20) est située contre la face extérieure de la paroi de la cloison creuse (4) dans laquelle est inséré le boîtier (1), lorsque l'appareillage électrique est inséré dans le boîtier (1).

Après insertion du boîtier (1) dans la cloison creuse (4), l'appareillage électrique est amené à proximité du boîtier (1) afin que les extrémités des fils électriques accessibles dans le boîtier soient connectées à l'appareillage électrique. L'étape suivante consiste à insérer le mécanisme de l'appareillage électrique dans le boîtier (1). Chaque vis (2) du boîtier (1), partiellement vissée, pénètre alors dans un orifice circulaire (210) de la façade (20) de l'appareillage électrique. L'appareillage électrique est alors facilement mis en place en exerçant une rotation de ce dernier autour de l'axe du boîtier (1). Chaque vis (2) est ensuite vissée. La longueur de chaque vis (2) est au moins égale à la distance comprise entre le bord (17) du boîtier (1) et la portion plane (7)en position basse, augmentée de la longueur du puits (70) associé. Ainsi, lorsque chaque vis (2) est enfoncée jusqu'à ce que la tête de la vis (2) atteigne la façade (20) de l'appareillage électrique, lorsque l'on continue à visser, la bride (11) subit un mouvement de translation selon l'axe de la vis (2) dans la direction du bord ouvert (17) du boîtier (1), grâce à la présence des dispositifs articulés des moyens d'allongement (12), qui s'étirent. Il faut souligner le fait que, pour la mise en place de l'appareillage électrique, les vis (2) du boîtier (1) sont dévissées suffisamment pour permettre leur passage dans des orifices du mécanisme prévus à cet effet, sans pour autant qu'il soit nécessaire de les dévisser complètement.

Au cours du vissage de chaque vis (2), la paire de tenons (14) pénètre dans les rainures (15) des montants (150). Le vissage est stoppé lorsque chaque portion plane (7) arrive contre la paroi interne de la cloison creuse (4), comme représenté à la figure 1B. La cloison creuse (4), dans laquelle est inséré le boîtier (1), est alors prise en sandwich entre les brides (11) d'une part, et la face arrière de la façade (20) de l'appareillage électrique d'autre part ; la face circulaire du bord (17) du boîtier (1) est en contact avec la face arrière de la façade (20). L'appareillage électrique est également parfaitement plaqué contre la cloison.

Si une intervention électrique est nécessaire lorsque l'appareillage électrique est en place dans le boîtier (1), ce dernier peut facilement être retiré de la cloison creuse (4). L'appareillage électrique est tout d'abord retiré du boîtier (1) après un dévissage partiel des vis (2) et une rotation de la façade (20), de façon à faire coïncider chaque tête de vis (2) du boîtier avec un orifice circulaire (210) de la façade (20). La façade (20) peut alors être retirée. Les extrémités des fils électriques sont déconnectées de l'appareillage électrique. Enfin, les brides (11) peuvent être ramenées vers l'intérieur du boîtier (1), par exemple à l'aide des doigts.

Notons que le boîtier (1) est réalisé, par exemple, en plastique moulé. Les brides (11), les moyens d'allongement (12) et le boîtier (1) peuvent former un ensemble monobloc.

L'un des avantages de l'invention est de fournir un boîtier simple à poser et adaptable à différentes épaisseurs de cloison. En outre, le positionnement d'aplomb de l'appareillage électrique est rendu aisé durant toute la phase de fixation de l'ensemble boîtier / appareillage électrique, sans qu'il soit nécessaire - à l'extrême - de déposer l'appareillage pour modifier l'aplomb du boîtier comme c'est le cas dans l'art antérieur lorsqu'il y a deux modes de fixations distincts.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Boîtier (1) à brides comportant une partie cylindrique (10) fermée par un fond (3) pour fixer un appareillage électrique dans une cloison creuse (4), des brides (11) de fixation articulées solidaires du boîtier (1), aptes chacune à être entraînée par une vis (2) pour fixer simultanément l'appareillage électrique dans le boîtier (1) et pincer la cloison creuse (4) entre une façade de l'appareillage électrique et les brides (11), chacune des brides (11) étant mobile en translation selon un axe parallèle à la génératrice de la partie cylindrique (10), **caractérisé en ce que** chacune des brides (11) est reliée au boîtier (1) par des moyens d'allongement (12) qui incluent une pluralité de segments articulés (121) pour s'étendre selon une direction longitudinale lors du pincement de la cloison entre une façade de l'appareillage électrique et les brides.

2. Boîtier (1) selon la revendication 1, dans lequel les brides (11), les moyens d'allongement (12) et le boîtier (1) forment un ensemble monobloc.

3. Boîtier (1) selon la revendication 1 ou 2, dans lequel les moyens d'allongement (12) comportent des segments (121) articulés deux à deux par une portion de moindre épaisseur (122) formant une charnière propre à permettre l'allongement du dispositif articulé (12) sous l'action d'un vissage dans la bride (11) exercé par la vis (2).

4. Boîtier (1) selon l'une quelconque des revendications 1 à 3, dans lequel chaque bride (11) est située dans une ouverture pratiquée dans la partie cylindrique (10) et délimitée par une découpe en "U" (9), les moyens d'allongement (12) étant conçus pour relier la bride (11) au fond (3) de manière flexible, de façon à permettre la rotation de la bride (11) autour de l'extrémité des moyens d'allongement reliée au fond (3) du boîtier (1), ladite rotation correspondant à un basculement de la bride (11) vers le centre de la partie cylindrique (10) pour permettre l'introduction du boîtier (1) dans un perçage d'une cloison.

5. Boîtier (1) selon l'une quelconque des revendications 1 à 4, dans lequel chaque bride (11) comprend un puits (70) longitudinal, taraudé à l'intérieur, conçu pour accueillir une vis (2) et une portion plane (7) substantiellement parallèle au fond (3) du boîtier (1), au moins une rampe (71) destinée à faciliter l'insertion du boîtier (1) dans un perçage étant formée perpendiculairement à la portion plane (7).

6. Boîtier (1) selon la revendication 5, dans lequel des moyens de guidage (13) comprenant un guide partiellement cylindrique sont agencés dans l'alignement longitudinal du puits (70) de chacune des brides (11) pour permettre de positionner de façon amovible chaque vis selon un axe longitudinal.

7. Boîtier (1) selon l'une quelconque des revendications 1 à 6, dans lequel les moyens d'allongement (12) comprennent une série de segments articulés (121) aptes à s'allonger d'une longueur (6) comprise entre 5 et 20 mm sous l'action du vissage d'une vis (2).

8. Boîtier (1) selon l'une quelconque des revendications 3 à 7, dans lequel chaque paire de segments (121) est agencée pour former un angle fermé (120) déterminé inférieur à 60°, les segments (121) étant aptes à être alignés entre eux lorsque la bride (11) est complètement vissée.

9. Boîtier (1) selon l'une quelconque des revendications 1 à 8, dans lequel chaque bride (11) comporte latéralement au moins un tenon (14) propre à coulisser dans une rainure (15) formée dans l'épaisseur de la paroi du boîtier (1), selon un axe parallèle à la génératrice de la partie cylindrique (10), le tenon (14) formant un moyen de blocage pour empêcher la rotation des brides (11) selon l'axe des vis (2) lors du vissage.

10. Boîtier (1) selon l'une quelconque des revendications 1 à 9, dans lequel les moyens d'allongement sont délimités latéralement par des fentes (16) du boîtier (1) prévues pour conserver une liberté de mouvement des segments articulés (121).

11. Boîtier (1) selon l'une quelconque des revendications 1 à 10, dans lequel des picots (131) sont situés sur le pourtour extérieur du boîtier (1) à proximité de son bord ouvert (17) pour l'empêcher de tourner par rapport à la cloison creuse (4) et assurer son maintien en attendant la mise en place de l'appareillage électrique.

12. Boîtier (1) selon l'une quelconque des revendications 1 à 11, dans lequel la partie cylindrique (10) et/ou le fond (3) du boîtier (1) comprend un ou plusieurs opercules détachables (31, 32) pour permettre la connexion de l'appareillage électrique à des fils électriques situés dans la cloison creuse (4).

13. Boîtier (1) selon l'une quelconque des revendications 9 à 12, dans lequel, l'arrière de l'appareillage électrique étant inséré dans le boîtier (1) encastré dans la cloison creuse (4), chaque vis (2), insérée dans un moyen de fixation (21) de l'appareillage électrique, est vissée dans le puits (70) associé à ladite vis (2), et chaque bride (11) subit un mouvement de translation selon l'axe de la vis (2), entraînant l'insertion du tenon (14) dans la rainure (15), pour assurer la prise en sandwich de la cloison (4) entre les portions planes (7) des brides (11) et la face arrière de la façade (20) de l'appareillage électrique.

14. Boîtier (1) selon la revendication 13, dans lequel les moyens de fixation (21) de l'appareillage électrique sont au moins deux trous oblongs (215) dont l'axe de symétrie décrit un arc de cercle et dont une extrémité se termine par une portion circulaire (210) de diamètre supérieur au diamètre de la tête de vis (2), l'entraxe des trous oblongs (215) étant sensiblement égale à l'entraxe des vis (2).

15. Utilisation du boîtier (1) à brides selon une des revendications 1 à 14, **caractérisée en ce que** le boîtier (1) sert à fixer un appareillage électrique dans un perçage cylindrique d'une cloison creuse (4) de diamètre sensiblement égal au diamètre extérieur de la partie cylindrique (10) du boîtier (1), la cloison (4) ayant une épaisseur comprise entre 9 et 26 mm.

16. Utilisation du boîtier (1) selon la revendication 15, dans laquelle la fixation de l'appareillage électrique dans la cloison creuse (4) comprend :
- le détachement d'un moins un opercule détachable, et l'insertion dans le boîtier (1), par l'ouverture laissée par l'opercule détaché, de l'extrémité d'une gaine contenant des fils électriques situés dans la cloison (4),
- insertion du boîtier (1) dans le perçage, l'ouverture du boîtier étant orientée vers l'installateur, chaque bride (11) subissant un mouvement de rotation vers l'intérieur du boîtier (1) pour permettre le passage du boîtier dans le perçage,
- mise en position du boîtier (1) dans la cloison (4) par rotation de chaque bride (11) vers l'extérieur du boîtier (1), chaque bride (11) étant située derrière la cloison (4),
- connexion de l'appareillage électrique avec l'extrémité des fils électriques accessibles dans le boîtier (1),
- insertion de l'appareillage électrique dans l'ouverture du boîtier (1), la façade de l'appareillage électrique comprenant des moyens de fixation (21),
- insertion d'une vis (2) du boîtier (1) dans chaque moyen de fixation (21) de l'appareillage électrique, et rotation de la façade (20) de l'appareillage électrique autour de l'axe du boîtier (1), d'un angle déterminé,
- serrage de chaque vis (2) entraînant une translation selon l'axe de la vis (2) de la bride (11) associée et l'étirement des moyens d'allongement (12) pour que la cloison creuse (4) soit prise en sandwich entre les brides (11) et la face arrière de la façade (20) de l'appareillage électrique.

## Claims

1. Flanged housing (1) comprising a cylindrical part (10) closed by a base (3) for fixing an electrical device in a hollow wall (4), articulated fixing flanges (11) joined to the housing (1), each capable of being entrained by a screw (2) in order to simultaneously fix the electrical device in the housing (1) and to grip the hollow wall (4) between a front of the electrical device and the flange (11), each of the flanges (11) being movable in Translation along an axis parallel to the generating line of the cylindrical part (1), **characterised in that** each of the flanges (11) is connected to the housing (1) by elongating means (12) which include a plurality of articulate segments (121) in order to extend in a longitudinal direction when the wall is gripped between a front of the electrical device and the flanges.

2. Housing (1) as claimed in Claim 1, wherein the flanges (11), the elongating means (12) and the housing (1) form an integral assembly.

3. Housing (1) as claimed in Claim 1 or Claim 2, wherein the elongating means (12) include segments (121) articulated in pairs by a portion of lesser thickness (122) forming a hinge capable of enabling the elongation of the articulated device (12) under the action of screwing into the flange (11) exerted by the screw (2).

4. Housing (1) as claimed in any one of Claims 1 to 3, wherein each flange (11) is situated in an opening made in the cylindrical part (10) and delimited by a U-shaped cut-out (9), the elongating means (12) being designed in order to connect the flange (11) to the base (3) flexibly in such a way as to permit the rotation of the flange (11) about the end of the elongating means connected to the base (3) of the housing (1), the said rotation corresponding to a tilting of the flange (11) towards the centre of the cylindrical part (10) in order to enable the introduction of the housing (1) into a bore in a wall.

5. Housing (1) as claimed in any one of Claims 1 to 4, wherein each flange (11) comprises an internally tapped longitudinal well (70) designed to receive a screw (2) and a flat portion (7) substantially parallel to the base (3) of the housing (1), at least one ramp (71) intended to facilitate the insertion of the housing (19) into a bore being formed perpendicular to the flat portion (7).

6. Housing (1) as claimed in Claim 5, wherein guiding means (13) comprising a partially cylindrical guide are provided in longitudinal alignment with the well (70) of each of the flanges (11) in order to enable removable positioning of each screws along a longitudinal axis.

7. Housing (1) as claimed in any one of Claims 1 to 6, wherein the elongating means (12) comprise a series of articulated segments (121) capable of elongation by a length (6) between 5 and 20 mm under the screwing action of a screw (2).

8. Housing (1) as claimed in any one of Claims 3 to 7, wherein each pair of segments is arranged so as to forum a predetermined closed angle (120) less than 60°, the segments (121) being capable of being aligned with one another when the flange (11) is completely screwed in.

9. Housing (1) as claimed in any one of Claims 1 to 8, wherein each flange (11) has laterally at least one lug (14) adapted to slide in a groove (15) formed in the thickness of the wall of the housing (1) along an axis parallel to the generating line of the cylindrical part (10), the lug (14) forming locking means in order to prevent rotation of the flanges (11) about the axis of the screws (2) during screwing.

10. Housing (1) as claimed in any one of Claims 1 to 9, wherein the elongating means are delimited laterally by slots (16) in the housing (1) which are provided in order to maintain a freedom of movement of the articulated segments (121).

11. Housing (1) as claimed in any one of Claims 1 to 10, wherein the pins (131) are situated on the external periphery of the housing (1) in the proximity of its open edge (17) in order to prevent it from turning relative to the hollow wall (4) and to ensure that it is retained whilst awaiting the positioning of the electrical device.

12. Housing (1) as claimed in any one of Claims 1 to 11, wherein the cylindrical part (10) and/or the base (3) of the housing (1) comprises one or several detachable covers (31, 32) in order to enable the connection of the electrical device to electrical wires situated in the hollow wall (4).

13. Housing (1) as claimed in any one of Claims 9 to 12, wherein with the back of the electrical device being inserted into the housing (1) embedded in the hollow wall (4), each screw (2) inserted into a means (21) for fixing the electrical device is screwed into the well (70) associated with the said screw (2), and each flange (11) undergoes a movement in translation along the axis of the screw (2), bringing about the insertion of the lug (14) in the groove (15) in order to ensure that the wall (4) is sandwiched between the flat portions (7) of the flanges (11) and the rear face of the front (20) of the electrical device.

14. Housing (1) as claimed in Claim 13, wherein the means (21) for fixing the electrical device are at least two oblong holes (215) of which the axis of symmetry describes an arc of a circle and of which one end terminates in a circular portion (210) having a diameter greater than the diameter of the head of a screw (2), the centre-to-centre distance between the oblong holes (215) being substantially equal to the centre-to-centre distance between the screws (2).

15. Use of the flanged housing (1) as claimed in any one of Claims 1. to 14, **characterised in that** the housing (1) serves for fixing an electrical device in a cylindrical bore in a hollow wall (4) having a diameter substantially equal to the external diameter of the cylindrical part (10) of the housing (1), the wall (4) having a thickness between 9 and 26 mm.

16. Use of the housing (1) as claimed in Claim 15, wherein the fixing of the electrical device in the hollow wall (4) comprises:
- the detachment of at least one detachable cover and the insertion into the housing (1), through the opening left by the detached cover, of the end of a sleeve containing electrical wires situated in the wall (4),
- insertion of the housing (1) into the bore, the opening of the housing being oriented towards the installer, each flange (11) undergoing a rotational movement toward the interior of the housing (1) in order to permit passage of the housing into the bore,
- positioning of the housing (1) in the wall (4) by rotation of each flange (11) towards the exterior of the housing (1), each flange (11) being situated behind the wall (4),
- connection of the electrical device to the ends of the electrical wires which are accessible in the housing (1),
- insertion of the electrical device into the opening of the housing (1), the front of the electrical device comprising fixing means (21),
- insertion of a screw (2) of the housing (1) into each fixing means (21) for the electrical device, and rotation of the front (20) of the electrical device about the axis of the housing (1) by a predetermined angle,
- tightening of each screw (2) leading to a translation along the axis of the screw (2) of the associated flange (11) and stretching of the elongating means (12) so that the hollow wall (4) is sandwiched between the flanges (11) and the rear face of the front (20) of the electrical device.

## Patentansprüche

1. Gehäuse (1) mit Laschen, aufweisend einen zylinderförmigen Teil (10), der durch einen Boden (3) geschlossen ist, um eine Elektroinstallation in einer hohlen Zwischenwand (4) zu befestigen, gelenkig gelagert, mit dem Gehäuse (1) einstückige Befestigungslaschen (11), die jeweils geeignet sind, von einer Schraube (2) angetrieben zu werden, um gleichzeitig die Elektroinstallation in dem Gehäuse (1) zu befestigen und die hohle Zwischenwand (4) zwischen einer Frontseite der Elektroinstallation und den Laschen (11) einzuklemmen, wobei jede der Laschen (11) entlang einer Achse parallel zu der Mantellinie des zylinderförmigen Teils (10) in Translation bewegbar ist, **dadurch gekennzeichnet, dass** jede der Laschen (11) durch Ausdehnungsmittel (12) mit dem Gehäuse (1) verbunden ist, die eine Mehrzahl von Segmenten (121) aufweisen, die gelenkig gelagert sind, um sich beim Einklemmen der Zwischenwand zwischen einer Frontseite der Elektroinstallation und den Laschen entlang einer Längsrichtung auszudehnen.

2. Gehäuse (1) gemäß Anspruch 1, wobei die Laschen (11), die Ausdehnungsmittel (12) und das Gehäuse (1) einen Monoblock-Satz ausbilden.

3. Gehäuse (1) gemäß Anspruch 1 oder 2, wobei die Ausdehnungsmittel (12) Segmente (121) aufweisen, die paarweise durch eine Abschnitt mit geringerer Dicke (122) gelenkig gelagert sind, der ein Gelenk ausbildet, das geeignet ist, das Ausdehnen der gelenkig gelagerten Vorrichtung (12) unter der Einwirkung eines in der Lasche (11) mittels der Schraube (2) durchgeführten Verschraubens zu ermöglichen.

4. Gehäuse (1) gemäß einem der Ansprüche 1 bis 3, wobei jede Lasche (11) in einer Öffnung angeordnet ist, die in dem zylinderförmigen Teil (10) vorgesehen ist und durch einen "U"-förmigen Ausschnitt (9) begrenzt ist, wobei die Ausdehnungsmittel (12) eingerichtet sind, um die Lasche (11) mit dem Boden (3) auf flexible Weise zu verbinden, so das das Drehen der Lasche (11) um das Ende der Ausdehnungsmittel ermöglicht wird, das mit dem Boden (3) des Gehäuses (1) verbunden ist, wobei das Drehen einem Kippen der Lasche (11) in Richtung zu der Mitte des zylinderförmigen Teils (10) entspricht, um das Einführen des Gehäuses (1) in eine Bohrung einer Zwischenwand zu ermöglichen.

5. Gehäuse (1) gemäß einem der Ansprüche 1 bis 4, wobei jede Lasche (11) aufweist: ein längsverlaufendes, innen mit einem Gewinde versehenes Bohrloch (70), das vorgesehen ist, um eine Schraube (2) aufzunehmen, und einen flachen Abschnitt (7), der im Wesentlichen parallel zu dem Boden (3) des Gehäuses (1) ist, wobei mindestens eine Rampe (71) dazu bestimmt ist, das Einsetzen des Gehäuses (1) in eine Bohrung zu erleichtern, die senkrecht zu dem flachen Abschnitt (7) ausgebildet ist.

6. Gehäuse (1) gemäß Anspruch 5, wobei Führungsmittel (13), die eine teilweise zylinderförmige Führung aufweisen, in der Längsausrichtung des Bohrlochs (70) von jeder der Laschen (11) angeordnet sind, um zu ermöglichen, jede Schraube entlang einer Längsachse auf herausnehmbare Weise zu positionieren.

7. Gehäuse (1) gemäß einem der Ansprüche 1 bis 6, wobei die Ausdehnungsmittel (12) eine Reihe von gelenkig gelagerten Segmenten (121) aufweisen, die geeignet sind, sich unter der Einwirkung des Verschraubens einer Schraube (2) um eine Lange (6) zwischen einschließlich 5 mm und 20 mm auszudehnen.

8. Gehäuse (1) gemäß einem der Ansprüche 3 bis 7, wobei jedes Paar von segmenten (121) eingerichtet ist, um einen bestimmten geschlossenen Winkel (120) von kleiner als 60° auszubilden, wobei die Segmente (121) geeignet sind, zueinander aufgerichtet zu sein, wenn die Lasche (11) vollstandig verschraubt ist.

9. Gehäuse (1) gemäß einem der Ansprüche 1 bis 8, wobei jede Lasche (11) seitlich mindestens einen Zapfen (14) aufweise, der geeignet ist, in einer Nut (15) zu gleiten, die in der Dicke der Wand des Gehäuses (1) entlang einer Achse parallel zu der Mantellinie des zylinderförmigen Teils (10) ausgebildet ist, wobei der Zapfen (14) ein Blockierungsmittel ausbildet, um beim Verschrauben das Drehen der Laschen (11) entlang der Achse der Schrauben (2) zu verhindern.

10. Gehäuse (1) gemäß einem der Ansprüche 1 bis 9, wobei die Ausdehnungsmittel seitlich durch Schlitze (16) des Gehäuses (1) begrenzt sind, die vorgesehen sind, um eine Bewegungsfreiheit der gelenkig gelagerten Segmente (121) zu bewahren.

11. Gehäuse (1) gemäß einem der Ansprüche 1 bis 10, wobei Stacheln (131) am Außenumfang des Gehäuses (1) in der Nähe seines offenen Randes (17) angeordnet sind, um zu verhindern, dass es sich bezüglich der hohlen Zwischenwand (4) dreht, und um sein Halten während des Wartens auf das Positionieren der Elektroinstallation zu gewährleisten.

12. Gehäuse (1) gemäß einem der Ansprüche 1 bis 11, wobei der zylinderförmige Teil (10) und/oder der Boden (3) des Gehäuses (1) einen oder mehr abnehmbare Deckel (31, 32) aufweist, um das Anschließen der Elektroinstallation an elektrische Leitungen zu ermöglichen, die in der hohlen Zwischenwand (4) angeordnet sind.

13. Gehäuse (1) gemäß einem der Ansprüche 9 bis 12, wobei, wenn der hintere Teil der Elektroinstallation in das in die hohle Zwischenwand (4) eingebettete Gehäuse (1) eingesetzt ist, jedes in ein Befestigungsmittel (21) der Elektroinstallation eingesetzte Schraube (2) in den der Schraube (2) zugeordneten Schacht (70) geschraubt wird, und jede Lasche (11) entlang der Achse der Schraube (2) einer Translationsbewegung unterzogen wird, wodurch das Einsetzen des Zapfens (14) in die Nut (15) bewirkt wird, um das sandwichartige anordnen der Zwischenwand (4) zwischen den flachen Abschnitten (7) der Laschen (11) und der Rückseite der Frontseite (20) der Elektroinstallation zu gewährleisten.

14. Gehäuse (1) gemäß Anspruch 13, wobei die Befestigungsmittel (21) der Elektroinstallation mindestens zwei Langlöcher (215) sind, deren Symmetrieachse einen Kreisbogen beschreibt und deren eines Ende durch einen kreisförmigen Abschnitt (210) endet, dessen Durchmesser größer als der Durchmesser des Schraubenkopfes (2) ist, wobei der Reihenabstand der Langlöcher (215) im Wesentlichen gleich dem Reihenabstand der Schrauben (2) ist.

15. Verwendung des Gehäuses (1) mit Laschen gemäß einem der Ansprüche 1 bis 14, **dadurch gekennzeichnet, dass** das Gehäuse (1) zum Befestigen einer Elektroinstallation in einer zylinderförmigen Bohrung einer hohlen Zwischenwand (4) dient, deren Durchmesser im Wesentlichen gleich dem Außendurchmesser des zylinderförmigen Teils (10) des Gehäuses (1) ist, wobei die Zwischenwand (4) eine Dicke zwischen einschließlich 9 mm und 26 mm hat.

16. Verwendung des Gehäuses (1) gemäß Anspruch 15, wobei das Befestigen der Elektroinstallation in der hohlen Zwischenwand (4) aufweist:
- das Abnehmen mindestens eines abnehmbaren Deckels und das Einsetzen des Endes einer Ummantelung, die in der Zwischenwand (4) angeordnete elektrische Leitungen enthält, durch die Öffnung, die durch den abgenommenen Deckel freigelegt ist, in das Gehäuse (1),
- Einsetzen des Gehäuses (1) in die Bohrung, wobei die Öffnung des Gehäuses in Richtung zu dem Installateur ausgerichtet ist, wobei jede Lasche (11) einer Drehbewegung in Richtung zu dem Inneren des Gehäuses (1) unterzogen wird, um das Passieren des Gehäuses in die Bohrung zu ermöglichen,
- Positionieren des Gehäuses (1) in der Zwischenwand (4) durch Drehen jeder Lasche (11) in Richtung zu dem Äußeren des Gehäuses (1), wobei sich jede Lasche (11) hinter der Zwischenwand (4) befindet,
- Anschließen der Elektroinstallation an das Ende der elektrischen Leitungen, die in dem Gehäuse (1) zugänglich sind,
- Einsetzen der Elektroinstallation in die Öffnung des Gehäuses (1), wobei die Frontseite der Elektroinstallation Befestigungsmittel (21) aufweist,
- Einsetzen einer Schraube (2) des Gehäuses (1) in jedes Befestigungsmittel (21) der Elektroinstallation und Drehen der Frontseite (20) der Elektroinstallation um einen bestimmten Winkel um die Achse des Gehäuses (1),
- Festziehen jeder Schraube (2), wodurch eine Translation der zugeordneten Lasche (11) entlang der Achse der Schraube (2) bewirkt wird, und Dehnen der Ausdehnungsmittel (12), damit die hohle Zwischenwand (4) sandwichartig zwischen den Laschen (11) und der Rückseite der Frontseite (20) der Elektroinstallation angeordnet wird.
